# EUROPEAN PATENT APPLICATION

(11) **EP 4 276 039 A1**
(43) Date of publication of application: **15.11.2023**
(21) Application number: 21917552.8
(22) Date of filing: 14.10.2021
(51) Int. Cl.: B65G 1/00, G01N 35/02, G01N 35/04

(54) **AUTOMATIC ANALYSIS SYSTEM**

(30) Priority: 08.01.2021 JP 2021002002
(71) Applicant: HITACHI HIGH-TECH CORPORATION, Tokyo 105-6409 (JP)
(72) Inventor: FUKUDA Nobuya, Tokyo 105-6409 (JP); IMAI Kenta, Tokyo 105-6409 (JP)
(74) Representative: MERH-IP Matias Erny Reichl Hoffmann Patentanwälte PartG mbB
(86) International application number: PCT/JP2021/038034
(87) International publication number: WO 2022/149327

(57) **Abstract**

There is provided an automatic analysis system that freely sets length or width dimensions to a traveling surface and that affects no influence on the layout of an automatic analyzer. It is possible to provide the automatic analysis system. In front of the automatic analyzer, a rail line 117 is installed, and a transfer robot 131 moves on the rail line 117. The rail line 117 restrains roll, pitch, and yaw rotation directions, and thus the transfer robot 131 does not fall. The rail line 117 is fixed to a first jack and a second jack, each jack is in contact with the automatic analyzer and a body with no gap, and thus the roll, pitch, and yaw rotation directions of the rail line 117 that is fixed to the jack are restrained. As a result, the length or width dimensions of a moving mechanism 133 to the traveling surface are freely settable.

## Description

### Technical Field

The present invention relates to an automatic analysis system.

### Background Art

Heretofore, in the case in which various reagents or samples are injected into an automatic analyzer that analyzes blood, reagents or samples have been mainly manually injected. In this case, regarding samples, a person may touch a sample, resulting in a risk of causing an infection risk. Regarding reagents, a person touches a reagent, resulting in a risk of contamination of a reagent due to an organic substance derived from the person. Therefore, Patent Literature 1 discloses a technique by which a self-propelled robot conveys samples.

### Citation List

### Patent Literature

Patent Literature 1: Japanese Patent Application Laid-Open No. 2001-278409

### Summary of Invention

### Technical Problem

The present invention targets the automatic analyzer that handles reagents and samples and that is installed on a free access floor that is a floor laid such that a given space is secured on a body. In the previously existing technique, a transfer robot that injects a reagent or sample into the automatic analyzer moves to a destination by a traveling unit moving on a plane. Moreover, in order to inject a reagent or sample, a function is included in which a robot hand transfers a reagent or sample to near the input port of the automatic analyzer. Since the automatic analyzer has a premise that a reagent or sample is manually injected, the height from the ground area to the input port ranges from about 0.8 m to 1.5 m. Therefore, the robot hand is demanded to convey a reagent or sample at a height ranging from 0.8 m to 1.5 m from the ground area.

In the proposed technique, the robot hand has to convey a reagent or sample to the height of the input port of the automatic analyzer, and the center of gravity inevitably becomes high. Therefore, in order to prevent the transfer robot from falling, it is necessary to increase one or both of the length or width dimensions with respect to the traveling surface rather than the size in the vertical direction with respect to the traveling surface. In this case, the input port surface of the automatic analyzer needs a space in which the transfer robot moves, resulting in a problem that the layout when the automatic analyzer is installed is restricted. Moreover, in the case of adopting a transfer robot in a facility where the automatic analyzer is already installed, the layout of the automatic analyzer has to be reviewed depending on the cases, resulting in a problem that requires time and costs.

The present invention has been made in view of the circumstances, and an object of the present invention is to provide the automatic analysis system that freely sets length or width dimensions to a traveling surface and that affects no influence on the layout of the automatic analyzer.

### Solution to Problem

In order to achieve the object, the present invention provides the automatic analysis system including a plurality of post groups that is installed on a floor; in the plurality of support poles, a plurality of top plates installed on a first support pole group; the automatic analyzer installed on the plurality of top plates, the automatic analyzer having a liquid injection port; in the plurality of support poles, a rail that is installed on a second support pole group; the robot that moves on the rail and that delivers a consumable item to the automatic analyzer; and a jack that is installed below the automatic analyzer and between the floor and the top plate. The jack includes a lift unit that gives force to push back the automatic analyzer above in a vertical direction, and the rail is fixed, in the jack, to an upper part of a site projecting in an outer direction of the automatic analyzer.

### Advantageous Effects of Invention

According to the present invention, an effect is exerted in which the transfer robot does not fall even though the length or width dimensions to the traveling surface is more reduced than the size in the vertical direction to the traveling surface.

### Brief Description of Drawings

Fig. 1 shows diagrams showing the body of the automatic analysis system and support poles.
Fig. 2 shows diagrams showing the top plate of the automatic analysis system.
Fig. 3 shows diagrams showing the installed states of the automatic analyzer.
Fig. 4 shows diagrams showing a first jack of the automatic analysis system.
Fig. 5 shows diagrams showing a second jack of the automatic analysis system.
Fig. 6 is a diagram showing the arrangement position of the jack.
Fig. 7 shows diagrams showing the arrangement position of the jack.
Fig. 8 shows diagrams showing a lift function of the automatic analysis system.
Fig. 9 shows diagrams showing the automatic analysis system after a handle is removed.
Fig. 10 is a diagram showing a rail line being laid.
Fig. 11 shows the function of the rail line.
Fig. 12 shows diagrams showing a moment direction acting on the rail line.
Fig. 13 shows diagrams showing the moment direction acting on the rail line.
Fig. 14 is a diagram showing the arrangement position of a transfer robot.
Fig. 15 shows diagrams showing a moment direction acting on the transfer robot.
Fig. 16 is a diagram showing the overall automatic analysis system.
Fig. 17 is a diagram showing another overall automatic analysis system different from Fig. 16.
Fig. 18 is a diagram showing another overall automatic analysis system different from Figs. 16 and 17.

### Description of Embodiments

In the following, an embodiment of the automatic analysis system will be described in detail with reference to the drawings. Note that in all diagrams that illustrate the embodiment, the same components are designated with the same reference signs in principle, and the duplicated description is omitted. Note that in the present specification, containers for various reagents or samples, magazines, columns of a mass spectrometer (MS), and the like, which are targets to be conveyed, are referred to as "consumable items" in general terms.

### First Embodiment

A first embodiment is an embodiment of the automatic analysis system including a plurality of post groups that is installed on a floor; in the plurality of support poles, a plurality of top plates installed on a first support pole group; the automatic analyzer installed on the plurality of top plates, the automatic analyzer having a liquid injection port; in the plurality of support poles, the rail that is installed on the second support pole group; the robot that moves on the rail and that delivers a consumable item to the automatic analyzer; and a jack that is installed below the automatic analyzer and between the floor and the top plate. The jack includes a lift unit that gives force to push back the automatic analyzer above in a vertical direction; and the rail is fixed, in the jack, to an upper part of a site projecting in an outer direction of the automatic analyzer.

More specifically, the first embodiment is an embodiment of the automatic analysis system including: a plurality of support poles that is installed on a convey floor that conveys the consumable item; in the plurality of support poles, a plurality of top plates that is installed on a first support pole group; the automatic analyzer that is installed on the plurality of top plates; in the plurality of support poles, the rail that is installed on the second support pole group; the robot that moves on the rail and delivers a container containing a liquid to the automatic analyzer; and the first jack and the second jack having a narrow shape that are installed below a vertical direction of the automatic analyzer, and between the floor and the first top plate. The automatic analyzer includes a liquid injection port. The automatic analyzer is installed on a W plane formed of an X-axis parallel with a plane on which the liquid injection port is installed and a Y-axis perpendicular to the X-axis. The first support pole group is located below the vertical direction of the automatic analyzer, the second support pole group is located in the outer direction of the automatic analyzer and in the Y-axis direction, and the first jack and the second jack are respectively arranged along the Y-axis direction apart in the X-axis direction. The first jack includes a first lift unit and a second lift unit that give force to push back the automatic analyzer above in the vertical direction. The second jack includes a third lift unit and a fourth lift unit that give force to push back the automatic analyzer above in the vertical direction, and the first lift unit, the second lift unit, the third lift unit, and the fourth lift unit are respectively arranged apart in the Y-axis direction. In the first jack and the second jack, the rail is fixed to an upper part of a site projecting in an outer direction of the automatic analyzer.

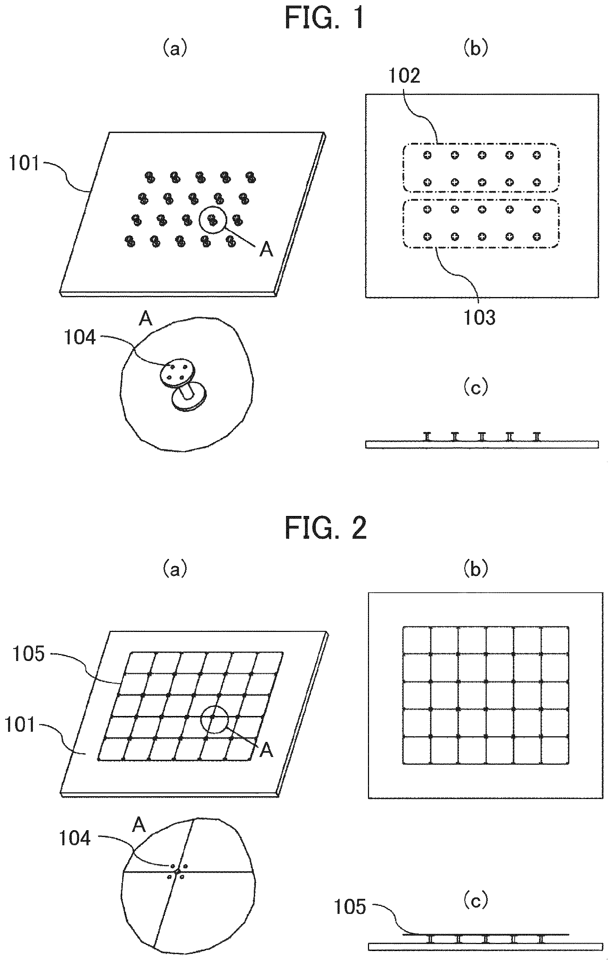

That is, the present embodiment targets the automatic analysis system including the automatic analyzer installed on the free access floor. A perspective view, a plan view, and a front view of free access floor components are respectively shown in (a), (b), and (c) in Fig. 1, Fig. 2, and Fig. 3.

As shown in Fig. 1, on a body 101, which is a structure of a building, a first support pole 102 and a second support pole 103 are installed at a certain interval. For the installation method, a fixing component such as an adhesive or screw is used. The detail of the shapes of the first support pole 102 and the second support pole 103 is as shown in an enlarged diagram A in (a) of Fig. 1. The first support pole 102 and the second support pole 103 are provided with a floor fixing hole 104.

Subsequently, as shown in Fig. 2, a top plate 105 is placed on the first support pole 102 and the second support pole 103. The top plate 105 is fixed to the first support pole 102 and the second support pole 103 through the floor fixing hole 104 with screw fixing components and the like, not shown.

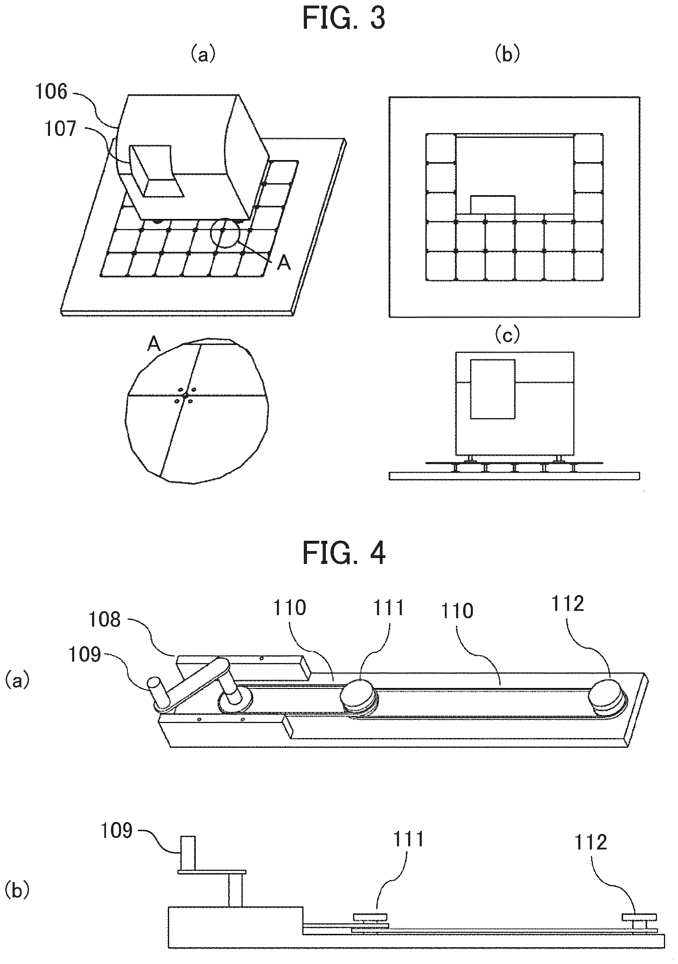

Fig. 3 shows a state in which an automatic analyzer 106 including a liquid injection port 107 is arranged on the top plate 105. With the use of the free access floor as shown in Fig. 1 to Fig. 3, a space is provided between the body 101 and the top plate 105, and power supply lines are laid, for example. As shown in Fig. 3, on a W plane formed of an X-axis parallel with a plane on which the liquid injection port 107 is installed and a Y-axis perpendicular to this X-axis the automatic analyzer 106 is arranged.

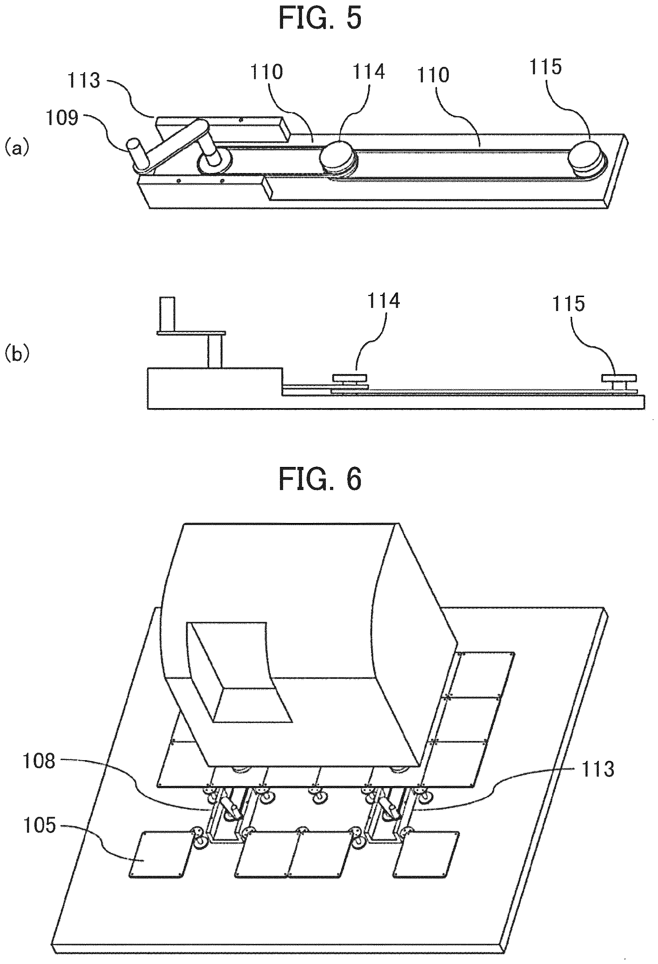

Fig. 4 and Fig. 5 show an exemplary structure of a jack used in the automatic analysis system of the present embodiment. A first jack 108 in Fig. 4 has a function that rotates a handle 109 to transmit rotation using a drive component 110 and simultaneously raises and lowers a first lift 111 and a second lift 112. Moreover, a second jack 113 as shown in Fig. 5 also similarly has a function that rotates a handle 109 and simultaneously raises and lowers a third lift 114 and a fourth lift 115.

As shown in Fig. 6, in the automatic analysis system of the present embodiment, the automatic analyzer is installed on the second support pole 103, the top plate 105 that is located immediately before the automatic analyzer 106 is removed, and the first jack 108 and the second jack 113 are inserted below the underside of the automatic analyzer 106.

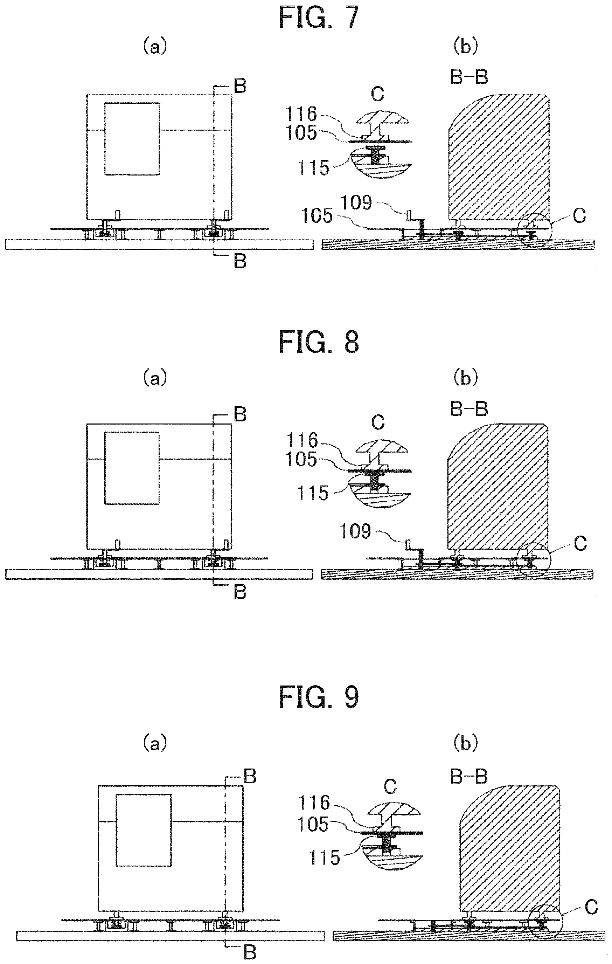

In doing so, as shown in C in (b) of Fig. 7, the first jack 108 and the second jack 113 are arranged such that the first lift 111, the second lift 112, the third lift 114, and the fourth lift 115 are located directly below an automatic analyzer leg 116, which is the installation surface for the automatic analyzer 106 and the top plate 105. In this stage, the first lift 111, the second lift 112, the third lift 114, and the fourth lift 115 do not touch the top plate 105.

Subsequently, the handle 109 is rotated to raise the first lift 111, the second lift 112, the third lift 114, and the fourth lift 115 to contact the top plate 105 on which the automatic analyzer leg 116 is placed as shown in Fig. 8. After that, as shown in Fig. 9, the handle 109 is removed from the first jack 108 and the second jack 113.

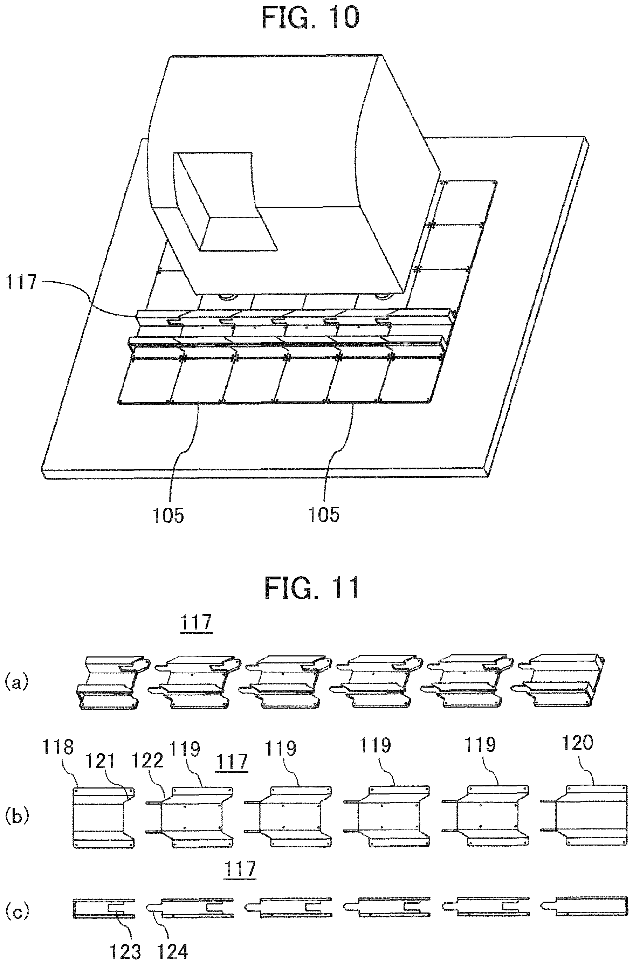

Subsequently, as shown in Fig. 10, regarding the top plate 105 that is removed, the rail line 117 is attached to the part of the top plate 105 immediately before the automatic analyzer 106, and the top plate 105 is again attached to the other part.

Fig. 11 shows the components of the rail line 117 of the present embodiment. As shown in (a), (b), and (c) in Fig. 11, the rail line 117 is formed of one start-end rail 118, one terminal-end rail 120, and a plurality of intermediate rails 119. That is, the rail line has two or more planes parallel with the X-axis on the Z-axis perpendicular to the W plane and has two or more planes parallel with the W plane, the rail line is divided into two or more pieces. Moreover, on a cut divided on the W plane, the rail line has a deeply recessed shape at one end and a projecting shape at the other end, and on a cut divided on a V plane perpendicular to the W plane, the rail line has a deeply recessed shape at one end and a projecting shape at the other end.

As shown in a plan view in (b) of Fig. 11, the rails are provided with a lateral recess 121 and a lateral projection 122, which fit into each other for use. Moreover, as shown in a front view in (c) of Fig. 11, the rails are provided with a vertical recess 123 and a vertical projection 124, which fit into each other for use.

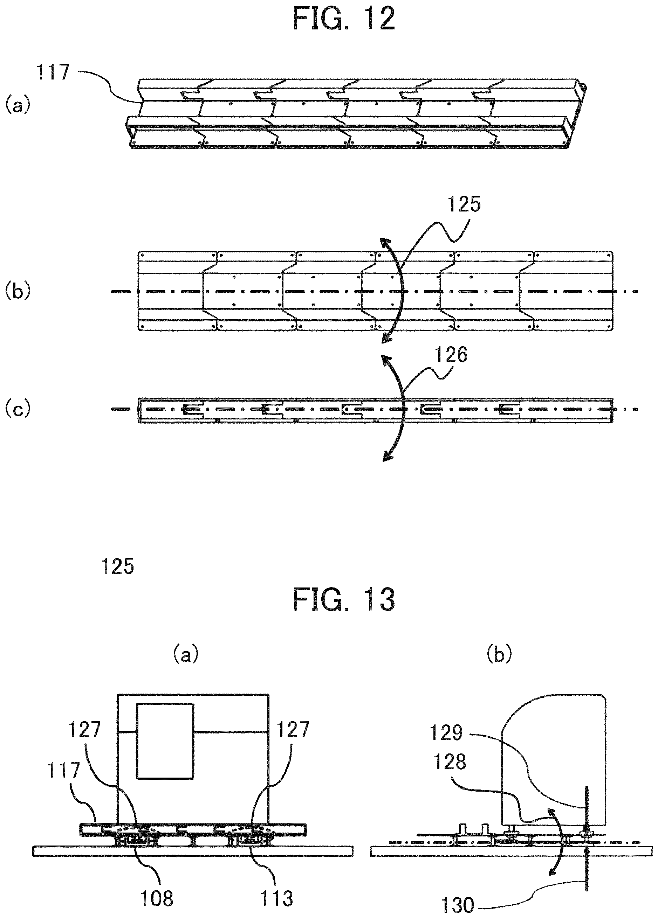

The rails fit into each other for use in the vertical direction and in the lateral direction as described above, and thus a yaw axis moment 125 that occurs in the rail line shown in (b) of Fig. 12 and the torsion of the rail line 117 that occurs in the rail axis due to a pitch axis moment 126 shown in (c) of Fig. 12 can be canceled.

Subsequently, on a joint surface 127 of the rail line 117 to the jack shown in Fig. 13, the rail line 117, the first jack 108, and the second jack 113 are fixed to each other. Since the first jack 108 and the second jack 113 are physically restrained in the vertical direction with an analyzer weight 129 and a body reaction force 130 through the first lift 111, the second lift 112, the third lift 114, and the fourth lift 115, the torsion of the rail line 117 that occurs in the rail line due to a roll axis moment 128 can be canceled.

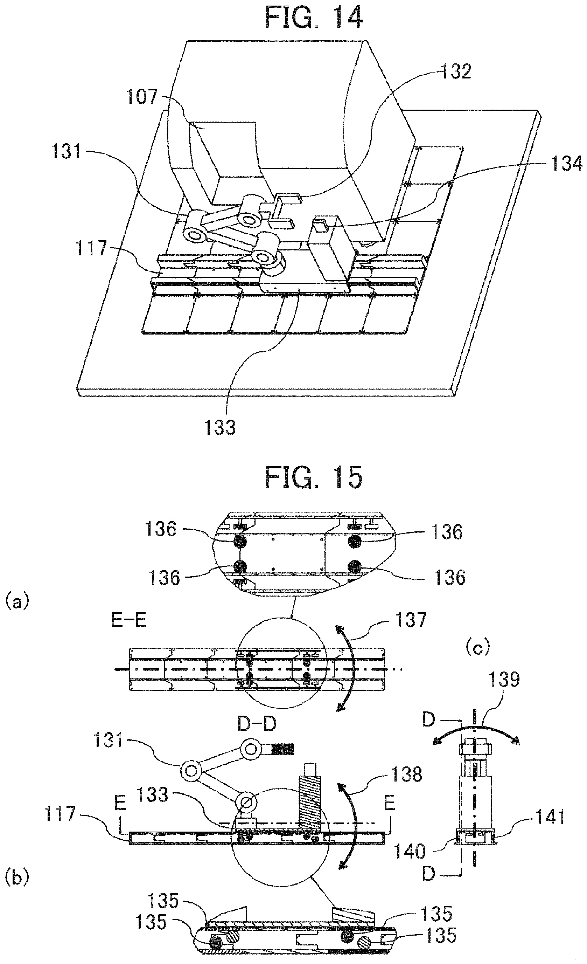

Subsequently, as shown in Fig. 14, on the rail line 117, a transfer robot 131 having a robot hand 132 and a moving mechanism 133 are arranged. This transfer robot 131 has a function that injects a liquid container 134 into which a sample or reagent is put into the liquid injection port 107 of the automatic analyzer by the robot hand 132.

Referring to Fig. 15, the moving mechanism 133 of the automatic analysis system of the present embodiment will be described. The moving mechanism 133 contacts the V plane of the rail line 117 at three points or more, and contacts two or more planes parallel with the W plane of the rail line 117 at three points or more. As shown in D-D cross-section in (b) of Fig. 15, eight vertical wheels 135 are provided in total; four wheels are shown in Fig. 15 and four wheels at opposite positions to the four wheels shown. Since four each of the vertical wheels 135 on a rail near side 140 and a rail back side 141 are inscribed in each of the upper side and the lower side of the rail line 117, the transfer robot 131 does not come out of the rail line 117 due to a pitch axis moment 138 that occurs in the transfer robot 131.

Subsequently, as shown in E-E cross-section in (a) of Fig. 15, four lateral wheels 136 are provided. As shown in (c) of Fig. 15, since two lateral wheels 136 are each inscribed in the rail near side 140 and the rail back side 141, the transfer robot 131 does not come out of the rail line 117 due to a yaw axis moment 137 that occurs in the transfer robot 131. Subsequently, even though a roll axis moment 139 that occurs in the transfer robot 131 is generated, the vertical wheel 135 is formed of two lines, the rail near side 140 and the rail back side 141, the transfer robot 131 does not come out of the rail line 117.

As described above, with the use of the fitting of the recess into the projection and the use of the analyzer weight 129 and the body reaction force 130 shown in Fig. 13, in the rail line 117 of the present embodiment, no torsion occurs in the yaw axis, the pitch axis, and the roll axis. Moreover, to the rail line 117, three or more wheels are inscribed in the two sides of the rail, and thus the transfer robot 131 does not come out of the rails to any of the yaw axis, the pitch axis, and the roll axis. As described above, the transfer robot 131 can be prevented from falling, it is possible to provide a design in free dimensions with no consideration of the position of the center of gravity.

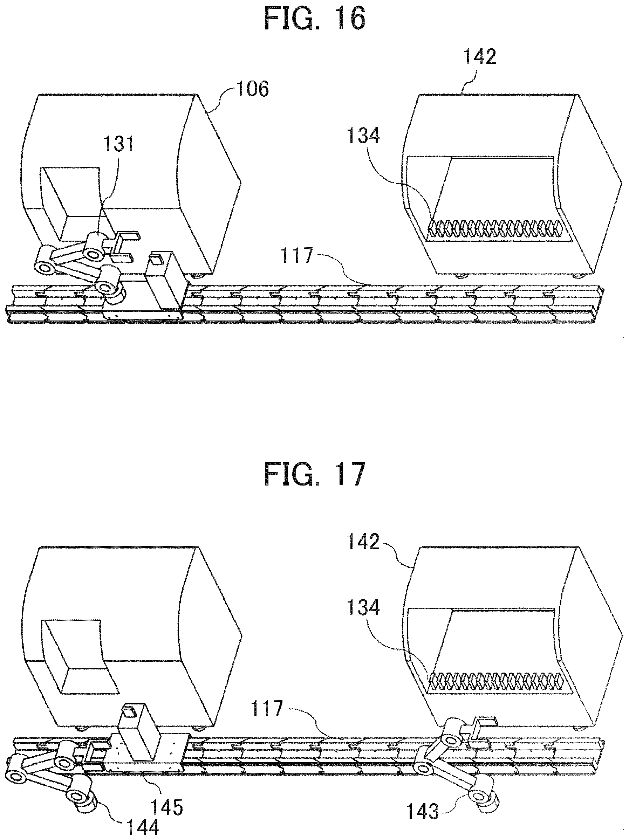

Fig. 16 shows the overall structure of the automatic analysis system of the present embodiment. At the position connecting the vicinity of the automatic analyzer 106 to the vicinity of a reagent-and-sample storage 142, the rail line 117 is laid. The reagent-and-sample storage 142 stores a plurality of liquid containers 134 containing a reagent or sample. At positions not shown, a storage unit and a control unit for management information on a reagent or sample are included, and the storage unit and the control unit store the number of reagents or samples injected into and discharged from the automatic analyzer 106 and the number of reagents or samples taken out from the reagent-and-sample storage 142. The control unit injects and discharges a reagent or sample by the transfer robot 131 based on the stored information.

For an example, in the case in which a reagent is short in the automatic analyzer 106, a reagent is taken out when the reagent is available in the reagent-and-sample storage 142, and the reagent is injected into the automatic analyzer 106. The storage unit and the control unit for management information on a reagent or sample may be built in the transfer robot 131, or may be arranged outside the transfer robot 131.

That is, a storage unit that stores numbers and types of consumable items installed in the liquid storage and the automatic analyzer is included. In the case in which the number of consumable items injected into the automatic analyzer is below the number preset by an operator, the control unit conducts control such that the robot automatically takes a consumable item from the liquid storage and injects the consumable item into the automatic analyzer.

Fig. 17 shows another form of the automatic analysis system of the present embodiment. A container transfer robot 145 that solely carries the liquid container 134 moves on the rail line 117, and a container fetch robot 143 that is fixed to the installation surface fetches the liquid container 134 from the reagent-and-sample storage 142. Moreover, an analyzer injection robot 144 that is fixed to the installation surface injects the liquid container 134 that is conveyed by the container transfer robot 145 into the automatic analyzer 106.

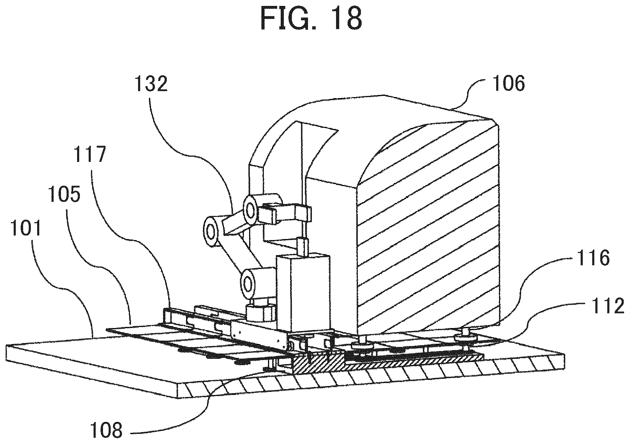

Fig. 18 shows a configuration in which the rail is fixed through the jack fixed by the weight of the automatic analyzer as another form of the present embodiment. As shown in Fig. 18, it is possible to fix the rail line 117 through the first jack 108 that is fixed to the body 101 by the weights of the body 101, the top plate 105, and the automatic analyzer 106.

In accordance with the automatic analysis system including the devices that convey reagents and samples according to the first embodiment described in detail, the automatic analyzer is installed on the free access floor laid on the body, the jack having the raising and lowering lift below the free access floor, the rail and the jack installed on the free access floor are fixed, the robot that delivers the container containing a liquid to the automatic analyzer is installed on the rail, the lift is jacked up to be brought into intimate contact between the free access floor on which the automatic analyzer is installed and the body to fix the jack by the weight of the automatic analyzer, the jack and the rail is fixed, the rail prevents the rotation of the roll axis, the pitch axis, and the yaw axis to the center of gravity of the robot, and thus an effect is exerted in which the robot does not fall even though the length or width dimensions to the traveling surface is more reduced than the size in the vertical direction to the traveling surface.

The present invention is not limited to the foregoing embodiment, and includes various exemplary modifications. For example, the foregoing embodiment is described in detail for a better understanding of the present invention, and is not necessarily limited to ones including all the configurations in the description.

### Reference Signs List

- 101: body
- 102: first support pole
- 103: second support pole
- 104: floor fixing hole
- 105: top plate
- 106: automatic analyzer
- 107: liquid injection port
- 108: first jack
- 109: handle
- 110: drive component
- 111: first lift
- 112: second lift
- 113: second jack
- 114: third lift
- 115: fourth lift
- 116: automatic analyzer leg
- 117: rail line
- 118: start-end rail
- 119: intermediate rail
- 120: terminal-end rail
- 121: lateral recess
- 122: lateral projection
- 123: vertical recess
- 124: vertical projection
- 125: yaw axis moment occurring in rail line
- 126: pitch axis moment occurring in rail line
- 127: joint surface of rail line to jack
- 128: roll axis moment occurring in rail line
- 129: analyzer weight
- 130: body reaction force
- 131: transfer robot
- 132: robot hand
- 133: moving mechanism
- 134: liquid container
- 135: vertical wheel

- 136: lateral wheel
- 137: yaw axis moment occurring in transfer robot
- 138: pitch axis moment occurring in transfer robot
- 139: roll axis moment occurring in transfer robot
- 140: rail near side
- 141: rail back side
- 142: reagent-and-sample storage
- 143: container fetch robot
- 144: analyzer injection robot
- 145: container transfer robot

## Claims

1. An automatic analysis system comprising:
a plurality of post groups that is installed on a floor;
in the plurality of support poles, a plurality of top plates installed on a first support pole group; an automatic analyzer installed on the plurality of top plates, the automatic analyzer having a liquid injection port; in the plurality of support poles, a rail that is installed on a second support pole group;
a robot that moves on the rail and that delivers a consumable item to the automatic analyzer; and
a jack that is installed below the automatic analyzer and between the floor and the top plate,
wherein: the jack includes a lift unit that gives force to push back the automatic analyzer above in a vertical direction; and
the rail is fixed, in the jack, to an upper part of a site projecting in an outer direction of the automatic analyzer.

2. The automatic analysis system according to claim 1,
wherein: the automatic analyzer includes a liquid insertion port; and
the automatic analyzer is installed on a W plane formed of an X-axis parallel with a plane on which the liquid injection port is installed and a Y-axis perpendicular to the X-axis.

3. The automatic analysis system according to claim 2,
wherein the jack is jacked up until the top plate on which the automatic analyzer is installed is brought into intimate contact with the floor to fix the jack to the rail by a weight of the automatic analyzer.

4. The automatic analysis system according to claim 2,
wherein: the first support pole group is located below the vertical direction of the automatic analyzer;
the second support pole group is located in the outer direction of the automatic analyzer and in the Y-axis direction; and
the jack is formed of a first jack and a second jack arranged in the Y-axis direction apart in the X-axis direction.

5. The automatic analysis system according to claim 4,
wherein: the first jack includes a first lift unit and a second lift unit that give force to push back the automatic analyzer above in the vertical direction;
the second jack includes a third lift unit and a fourth lift unit that give force to push back the automatic analyzer above in the vertical direction; and
the first lift unit, the second lift unit, the third lift unit, and the fourth lift unit are arranged apart in the Y-axis direction.

6. The automatic analysis system according to claim 5,
wherein the rail has two or more planes parallel with the X-axis on a Z-axis perpendicular to the W plane and has two or more planes parallel with the W plane.

7. The automatic analysis system according to claim 6,
wherein: the rail is divided into two or more pieces;
at a cut divided on the W plane, one has a deeply recessed shape and another has a projecting shape; and
at a cut divided on the V plane, one has a deeply recessed shape and another has a projecting shape.

8. The automatic analysis system according to claim 6,
wherein the robot includes a moving mechanism that moves on the rail and a robot hand that injects the consumable item into the liquid injection port.

9. The automatic analysis system according to claim 8,
wherein: the moving mechanism contacts the V plane of the rail at three points or more; and
the moving mechanism contacts two or more planes parallel with the W plane of the rail at three points or more.

10. The automatic analysis system according to claim 6,
wherein: the first jack includes a handle that is removable; and
the first lift unit, the second lift unit, and the handle are coupled to each other by a power transmission component, and the handle is rotated to simultaneously raise and lower the first lift unit and the second lift unit.

11. The automatic analysis system according to claim 6,
wherein the second jack includes a handle that is removable; and
the third lift unit, the fourth lift unit, and the handle are coupled to each other by a power transmission component, and the handle is rotated to simultaneously raise and lower the first lift unit and the second lift unit.

12. The automatic analysis system according to claim 6,
wherein the system is formed of a liquid storage that stores the consumable item, the automatic analyzer that is installed apart from the liquid storage, and the rail that is installed between the liquid storage and the automatic analyzer.

13. The automatic analysis system according to claim 12,
wherein the system includes a storage unit that stores numbers and types of the consumable items installed on the liquid storage and the automatic analyzer.

14. The automatic analysis system according to claim 13,
wherein in the storage unit, when a number of the consumable items injected into the automatic analyzer is below a number preset by an operator, the robot automatically fetches the consumable item from the liquid storage to inject the automatic analyzer.
